# EUROPÄISCHE PATENTSCHRIFT

(11) **EP 3 850 930 B1**
(45) Veröffentlichungstag und Bekanntmachung des Hinweises auf die Patenterteilung: **14.06.2023**
(21) Anmeldenummer: 21151143.1
(22) Anmeldetag: 12.01.2021
(51) Int. Cl.: A01B 59/00, A01B 59/06, B60D 1/07

(54) **ADAPTER EINES LANDWIRTSCHAFTLICHEN ANBAUGERÄTS UND LANDWIRTSCHAFTLICHES ANBAUGERÄT**
AGRICULTURAL ATTACHMENT AND ADAPTER FOR AN AGRICULTURAL ATTACHMENT
ADAPTATEUR D'UN ÉQUIPEMENT AGRICOLE ET ÉQUIPEMENT AGRICOLE

(30) Priorität: 15.01.2020 DE 102020100871
(43) Veröffentlichungstag der Anmeldung: 21.07.2021
(73) Patentinhaber: CLAAS Saulgau GmbH, 88348 Bad Saulgau (DE)
(72) Erfinder: Epp, Siegfried, 88436 Eberhardzell (DE)

(56) Entgegenhaltungen:
- DE-A1- 1 957 228
- DE-A1-102009 028 409
- DE-A1-102013 208 279
- US-A- 3 472 528
- US-A1- 2006 081 382
- US-B1- 7 029 019

## Beschreibung

Die Erfindung betrifft einen Adapter eines landwirtschaftlichen Anbaugeräts und ein landwirtschaftliches Anbaugerät.

In der Landmaschinentechnik ist es üblich, dass ein landwirtschaftliches Anbaugerät an ein landwirtschaftliches Trägerfahrzeug gekoppelt werden muss. So kann das landwirtschaftliche Trägerfahrzeug zum Beispiel über ein US-Quick-Hitch-Anbausystem oder über ein europäisches Unterlenker-Anbausystem verfügen, an welches ein Anbaugerät angekoppelt werden kann. Abhängig davon, ob das Trägerfahrzeug ein US-Quick-Hitch-Anbausystem oder ein europäisches Unterlenker-Anbausystem aufweist, muss das Anbaugerät einen entsprechenden Adapter aufweisen, um über den Adapter das Anbaugerät an das Trägerfahrzeug zu koppeln.

Da nicht nur zwischen US-Quick-Hitch-Anbausystemen und europäischen Unterlenker-Anbausystemen als solche unterschieden wird, sondern für diese Anbausysteme auch jeweils unterschiedliche Kategorien bestehen, ist es nach der Praxis erforderlich, eine Vielzahl unterschiedlicher Adapter für ein landwirtschaftliches Anbaugerät bereitzuhalten, um dasselbe auch an das entsprechende Anbausystem des landwirtschaftlichen Trägerfahrzeugs koppeln zu können.

Das Patent US 3,472,528 A offenbart eine Schlepper-Gerätekupplung zum Verbinden eines Arbeitsgerätes mit einem Kupplungsgestänge eines Schleppers, wobei zwischen dem Kupplungsgestänge des Schleppers und dem Arbeitsgerät eine Adaptervorrichtung zwischengeschaltet ist, die für jeden Kupplungspunkt sowohl schlepper-wie arbeitsgeräteseitig jeweils Kupplungsorgane mit mindestens zwei unterschiedlichen Durchmessern aufweist.

Aus DE 10 2013 208 279 A1 ist ein landwirtschaftliches Anbau- oder Anhängegerät mit Koppelmitteln zum Verbinden mit einem Lenker einer Dreipunktanbauvorrichtung eines Traktors bekannt, wobei der Lenker eine hakenförmige zu einer Seite offene Ausnehmung aufweist, in welcher die Koppelmittel aufnehmbar sind und die Koppelmittel einseitig an einer Halterung des Anbau- oder Anhängegerätes befestigt sind sowie an ihrem freien Ende mit einem den Lenker zu den Koppelmitteln hinführenden Leitelement versehen sind, wobei mindestens ein weiteres Leitelement vorgesehen ist, welches dem ersten Leitelement gegenübersteht und durch welches der Lenker von der dem freien Ende gegenüberliegenden Halterungsseite aus zu den Koppelmitteln hinführbar ist.

DE 1 957 228 A1 offenbart ein Kuppelglied für ein Anbaugerät, das mittels einer mit Fanggliedern versehenen Geräteanbauvorrichtung mit einem landwirtschaftlich nutzbaren Motorfahrzeug verbindbar ist, und aus einer, auf einen quer zur Zugrichtung am Anbaugerät angebrachten Kuppelzapfen mit Schiebesitz aufsteckbaren Buchse besteht, die axial fixierbar ist und auf ihrem dem festen Ende des Kuppelzapfens abgewandten Ende einen der Einführung in die Fangglieder dienenden Bund aufweist, wobei die Buchse und/oder deren Bund auf dem Kuppelzapfen stufenweise axial verstellbar ist.

Es besteht Bedarf daran, einen Adapter eines landwirtschaftlichen Anbaugeräts bereitzustellen, der eine flexible Ankopplung des Anbaugeräts an unterschiedliche Anbausysteme eines Trägerfahrzeugs ermöglicht.

Hiervon ausgehend liegt der vorliegenden Erfindung die Aufgabe zugrunde, einen neuartigen Adapter eines landwirtschaftlichen Anbaugeräts und ein landwirtschaftliches Anbaugerät zu schaffen.

Diese Aufgabe wird durch einen Adapter nach Anspruch 1 gelöst.

Erfindungsgemäß weist der Adapter einen ersten, zylindrisch konturierten Abschnitt, dessen Außendurchmesser ausgebildet ist, um das landwirtschaftliche Anbaugerät mit einem US-Quick-Hitch-Anbausystem eines landwirtschaftlichen Trägerfahrzeugs zu koppeln, und einen zweiten, kugelförmig konturierten Abschnitt, dessen Außendurchmesser ausgebildet ist, um das landwirtschaftliche Anbaugerät mit einem europäischen Unterlenker-Anbausystem eines landwirtschaftlichen Trägerfahrzeugs zu koppeln, auf.

Die Erfindung schlägt einen Adapter eines landwirtschaftlichen Anbaugeräts vor, der eine flexible Anbindung eines landwirtschaftlichen Anbaugeräts an unterschiedliche Anbausysteme eines landwirtschaftlichen Trägerfahrzeugs ermöglicht, und zwar sowohl an ein US-Quick-Hitch-Anbausystem als auch an ein europäisches Unterlenker-Anbausystem. Demnach ist es nicht mehr erforderlich, für unterschiedliche Anbausysteme von Trägerfahrzeugen unterschiedliche Adapter bereitzuhalten.

Der Adapter ist als einteilige oder einstückige Adapterbuchse ausgebildet, die eine Ausnehmung aufweist, über welche dieselbe auf einen Trägerbolzen aufschiebbar ist. Diese Ausgestaltung des Adapters ermöglicht es, auf einfache Art und Weise ein landwirtschaftliches Anbaugerät unter Nutzung des Adapters an unterschiedliche Anbausysteme eines landwirtschaftlichen Trägerfahrzeugs zu koppeln. Zur Anpassung muss der Adapter lediglich in einer definierten Orientierung auf den Trägerbolzen geschoben werden.

Nach einer weiteren vorteilhaften Weiterbildung des Adapters ist an einer ersten Seite des zylindrisch konturierten Abschnitts eine erste Anlaufscheibe mit einer dem zylindrisch konturierten Abschnitt zugewandten Anlaufschräge ausgebildet, wobei an einer zweiten Seite des zylindrisch konturierten Abschnitts eine zweite Anlaufscheibe mit einer dem zylindrisch konturierten Abschnitt zugewandten Anlaufschräge und vorzugsweise ferner einer dem kugelförmig konturierten Abschnitt zugewandten Anlaufschräge ausgebildet ist. Die Anlaufscheiben erleichtern die Ankopplung des Anbaugeräts an das Trägerfahrzeug, nämlich die Ankopplung des Anbausystems des Trägerfahrzeugs an den Adapter des Anbaugeräts.

Nach einer weiteren vorteilhaften Weiterbildung des Adapters weist der zylindrisch konturierte Abschnitt eine Länge auf, die der Breite des US-Quick-Hitch-Anbausystems entspricht, insbesondere der Länge eines US-Quick-Hitch-Anbausystems der Kategorie 2 oder der Kategorie 3N oder der Kategorie 3, wobei der kugelförmig konturierte Abschnitt einen Durchmesser aufweist, der dem Durchmesser des europäischen Unterlenker-Anbausystems entspricht, insbesondere dem Durchmesser eines europäischen Unterlenker-Anbausystem der Kategorie II oder der Kategorie III. Diese Dimensionierung des Adapters ist besonders bevorzugt, um die Flexibilität desselben im Hinblick auf die Ankopplung eines Anbaugeräts an unterschiedliche Anbausysteme zu gewährleisten.

Das erfindungsgemäße landwirtschaftliche Anbaugerät ist in Anspruch 7 definiert. Das erfindungsgemäße landwirtschaftliche Anbaugerät weist Aufnahmen und erfindungsgemäße Adapter auf, die an den Aufnahmen montiert sind. Ein solches Anbaugerät kann flexibel an unterschiedliche Anbausysteme eines landwirtschaftlichen Trägerfahrzeugs gekoppelt werden.

Nach einer weiteren vorteilhaften Weiterbildung des landwirtschaftlichen Anbaugeräts weist die jeweilige Aufnahme zwei voneinander beabstandeten Laschen auf, an welchen der jeweilige Adapter montiert ist. Diese Ausführung ist bevorzugt, um unter Verwendung des Adapters das Anbaugerät an ein landwirtschaftliches Trägerfahrzeug zu koppeln.

Nach einer weiteren vorteilhaften Weiterbildung des landwirtschaftlichen Anbaugeräts entspricht ein seitlicher Abstand zwischen einander zugewandten Laschen der Aufnahmen des Anbaugeräts maximal einem Innenmaß eines Hakenabstands des US-Quick-Hitch-Anbausystems. Ein seitlicher Abstand zwischen voneinander abgewandten Laschen der Aufnahmen des Anbaugeräts entspricht minimal einem Außenmaß des Hakenabstands des US-Quick-Hitch-Anbausystems. Diese Dimensionierung des Abstands zwischen den jeweiligen Laschen der Aufnahmen des landwirtschaftlichen Anbaugeräts ist besonders bevorzugt, um die gewünschte Flexibilität bei der Ankopplung eines landwirtschaftlichen Anbaugeräts an ein landwirtschaftliches Trägerfahrzeug zu gewährleisten.

Nach einer weiteren vorteilhaften Weiterbildung des landwirtschaftlichen Anbaugeräts weisen die Laschen in Einführrichtung des Anbausystems gesehen Einführschrägen auf. Diese Weiterbildung ist bevorzugt, um über die Einführschrägen die Ankopplung des Anbausystems des landwirtschaftlichen Trägerfahrzeugs an den Adapter des landwirtschaftlichen Anbaugeräts zu ermöglichen.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1: einen Ausschnitt aus einem erfindungsgemäßen landwirtschaftlichen Anbaugerät zusammen mit einem US-Quick-Hitch-Anbausystem der Kategorie 2 oder der Kategorie 3N in Draufsicht;
- Fig. 2: eine perspektivische Ansicht der Fig. 1;
- Fig. 3: einen Ausschnitt aus einem erfindungsgemäßen landwirtschaftlichen Anbaugerät zusammen mit einem US-Quick-Hitch-Anbausystem der Kategorie 3 in Draufsicht;
- Fig. 4: eine perspektivische Ansicht der Fig. 3;
- Fig. 5: einen Ausschnitt aus einem erfindungsgemäßen landwirtschaftlichen Anbaugerät zusammen mit einem europäischen Unterlenker-Anbausystem der Kategorie II in Draufsicht;
- Fig. 6: eine perspektivische Ansicht der Fig. 5;
- Fig. 7: einen Ausschnitt aus einem erfindungsgemäßen landwirtschaftlichen Anbaugerät zusammen mit einem europäischen Unterlenker-Anbausystem der Kategorie III in Draufsicht;
- Fig. 8: eine perspektivische Ansicht der Fig. 7;
- Fig. 9: ein Detail der Fig. 5, 6 mit Anbausystem;
- Fig. 10: ein Detail der Fig. 1, 2, 7, 8 ohne Anbausystem;
- Fig. 11: den erfindungsgemäßen Adapter in perspektivischer Alleindarstellung;
- Fig. 12: eine Weiterbildung der Erfindung;
- Fig. 13: einen Ausschnitt aus Fig. 1 mit einer ersten Bemaßung X;
- Fig. 14: einen Ausschnitt aus Fig. 3 mit einer zweiten Bemaßung Y.

Die Erfindung betrifft einen Adapter eines landwirtschaftlichen Anbaugeräts und ein landwirtschaftliches Anbaugerät.

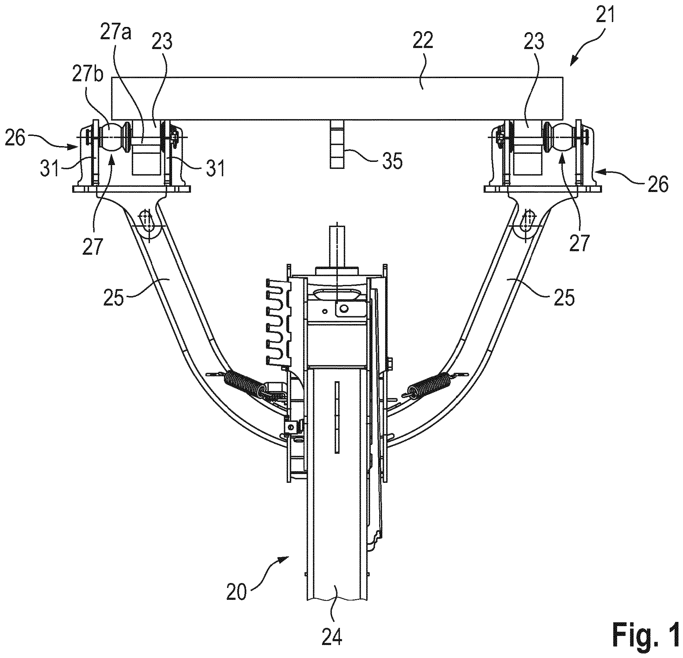

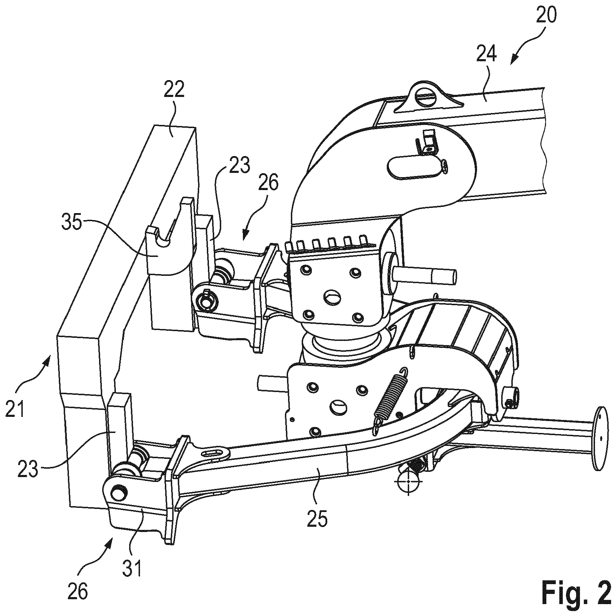

Fig. 1 und 2 zeigen unterschiedliche Ansichten eines Ausschnitts aus einem landwirtschaftlichen Anbaugerät 20 zusammen mit einem Anbausystem 21 eines landwirtschaftlichen Trägerfahrzeugs, wobei das landwirtschaftliche Anbaugerät 20 über das Anbausystem 21 an das landwirtschaftliche Trägerfahrzeug, welches im Detail nicht dargestellt ist, gekoppelt werden kann.

Bei dem in Fig. 1 und 2 gezeigten Anbausystem 21 handelt es sich um ein US-Quick-Hitch-Anbausystem der Kategorie 2 oder der Kategorie 3N. Dieses verfügt über einen Querbalken 22 sowie über an einer Seite des Querbalkens 22 befestigte Haken 23. Ein Quick-Hitch-Anbausystem ist üblicherweise an einem Krafthebesystem eines Trägerfahrzeugs, wie beispielsweise eines landwirtschaftlichen Traktors, angeordnet.

Vom landwirtschaftlichen Anbaugerät 20 sind ein Längsträger 24 sowie seitlich am Längsträger 24 angreifende Holme 25 gezeigt. An den freien Enden der Holme 25 verfügt das landwirtschaftliche Anbaugerät 20 über Aufnahmen 26 für Adapter 27, wobei in den Aufnahmen 26 aufgenommene Adapter 27 letztendlich der Ankopplung des landwirtschaftlichen Anbaugeräts 20 an das Anbausystem 21 des landwirtschaftlichen Trägerfahrzeugs dienen.

Im Sinne der hier vorliegenden Erfindung wird ein Adapter 27 vorgeschlagen, der eine Anbindung des Anbaugeräts 20 an unterschiedliche Anbausysteme eines landwirtschaftlichen Trägerfahrzeugs ermöglicht.

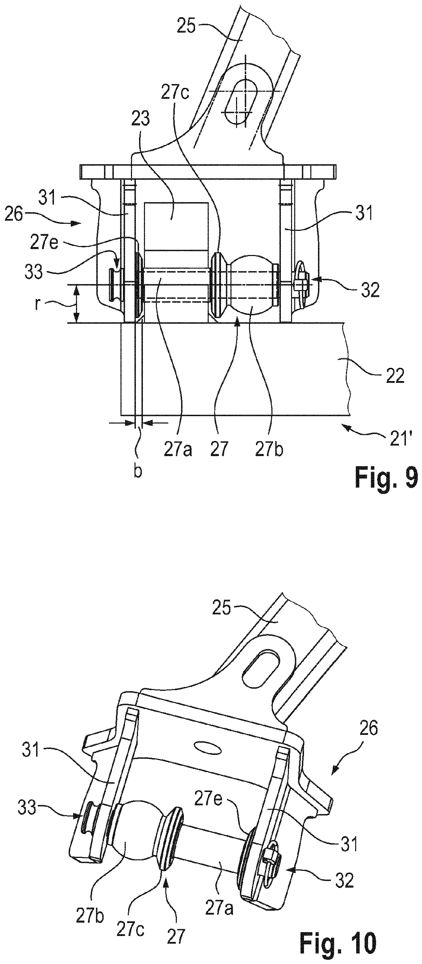

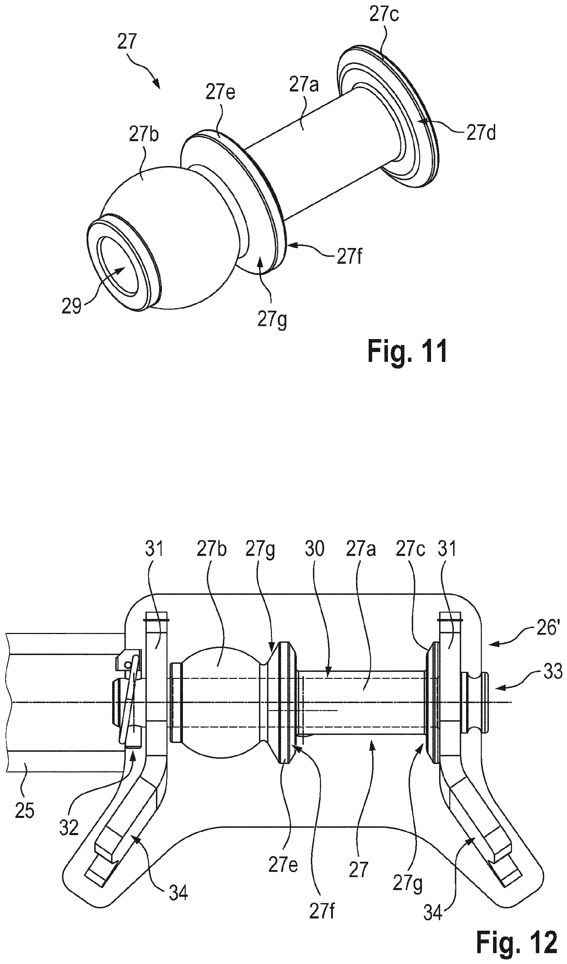

Fig. 11 zeigt diesen Adapter 27 in Alleindarstellung. Fig. 10 und 12 zeigen den Adapter 27 zusammen mit einer jeweiligen Aufnahme 26 bzw. 26` des Anbaugeräts 20.

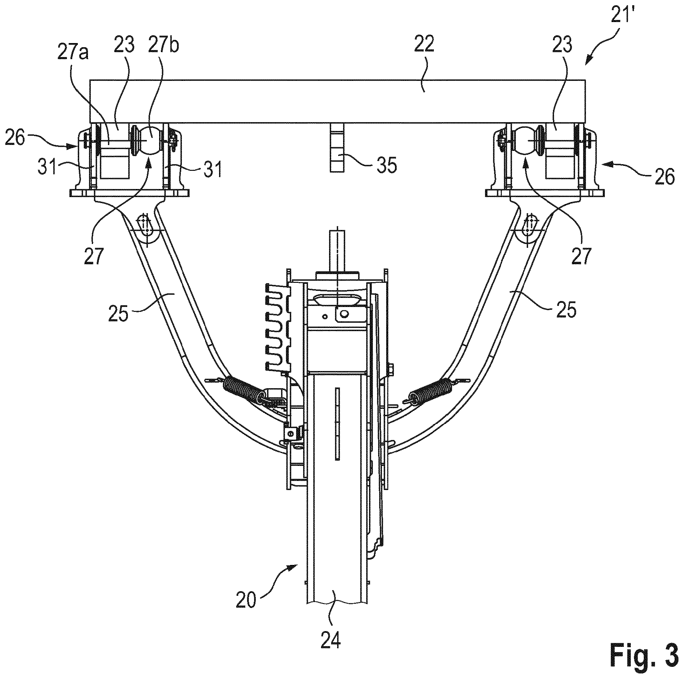

Der Adapter 27 verfügt über einen ersten, zylindrisch konturierten Abschnitt 27a, dessen Außendurchmesser ausgebildet ist, um das landwirtschaftliche Anbaugerät 20, welches solche Adapter aufweist, mit einem US-Quick-Hitch-Anbausystem eines landwirtschaftlichen Trägerfahrzeugs zu koppeln, und zwar in der Variante der Fig. 1, 2, 13 mit einem US-Quick-Hitch-Anbausystem 21 der Kategorie 2 oder der Kategorie 3N und in der Variante der Fig. 3, 4 und 14 mit einem US-Quick-Hitch-Anbausystem 21' der Kategorie 3. Ein derartiges US-Quick-Hitch-Anbausystem 21' der Kategorie 3 verfügt wiederum über einen Querbalken 22 sowie an einer Seite des Querbalkens 22 angeordnete Haken 23, wobei bei dem US-Quick-Hitch-Anbausystem 21 der Kategorie 2 oder der Kategorie 3N der Abstand zwischen den Haken 23 kleiner ist als beim US-Quick-Hitch-Anbausystem 21' der Kategorie 3.

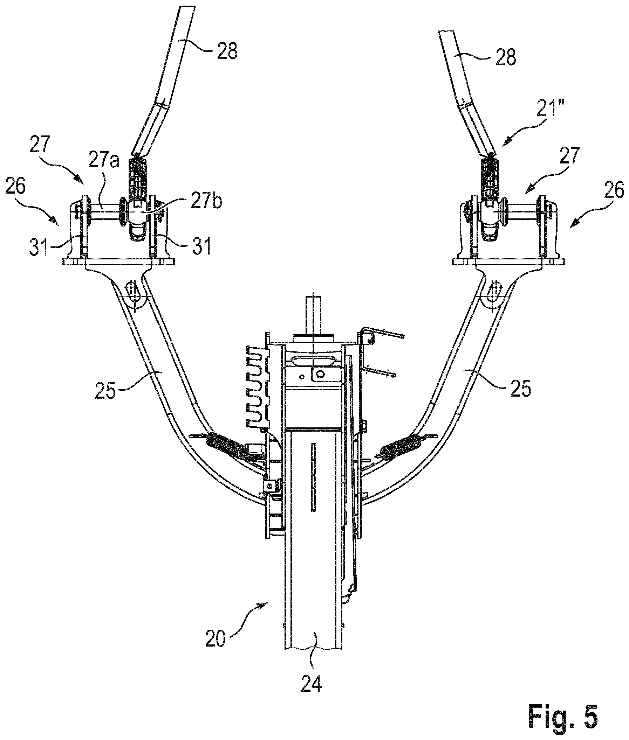

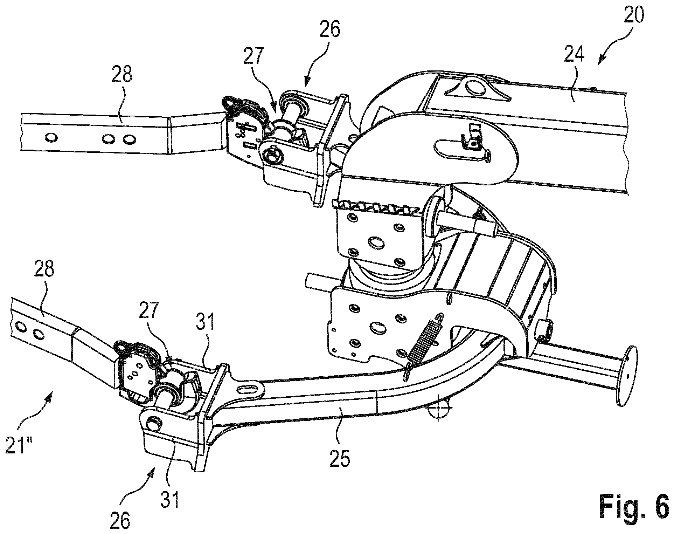

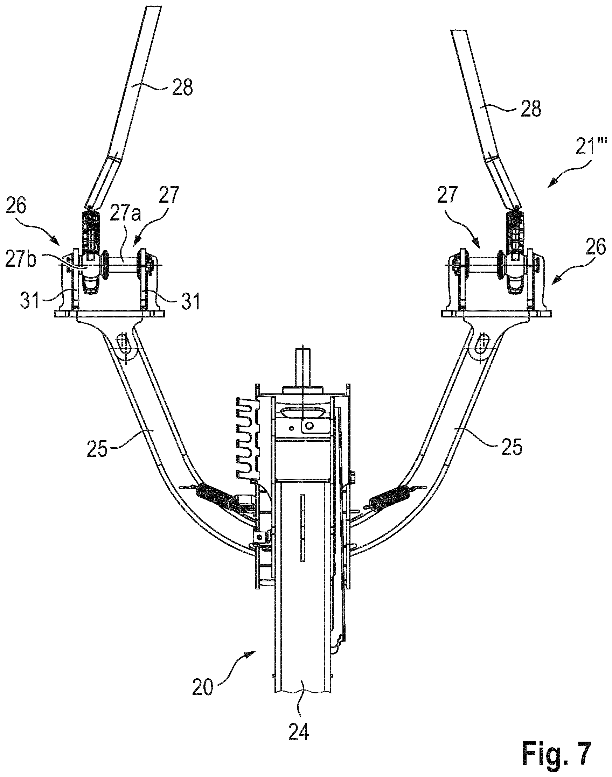

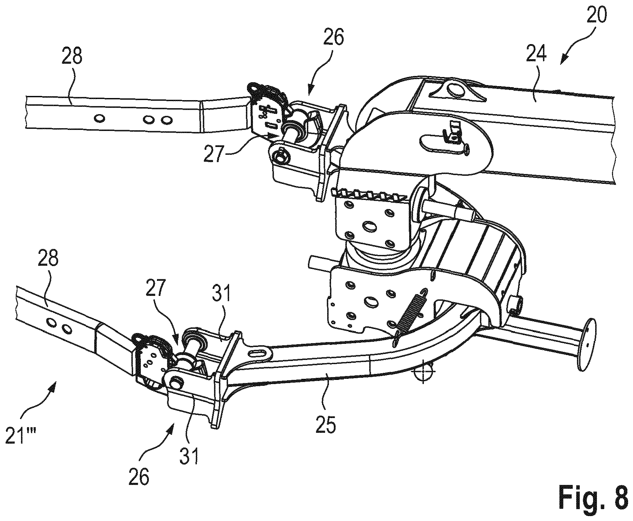

Zusätzlich zu diesem ersten, zylindrisch konturierten Abschnitt 27a verfügt der Adapter 27 über einen zweiten, kugelförmig konturierten Abschnitt 27b, dessen Außendurchmesser ausgebildet ist, um über den Adapter 27 das landwirtschaftliche Anbaugerät mit einem europäischen Unterlenker-Anbausystem eines landwirtschaftlichen Trägerfahrzeugs zu koppeln, und zwar in der Variante der Fig. 5 und 6 mit einem europäischen Unterlenker-Anbausystem 21" der Kategorie II und in der Variante der Fig. 7 und 8 mit einem europäischen Unterlenker-Anbausystem 21‴ der Kategorie III.

Die in Fig. 5, 6, 7 und 8 gezeigten europäischen Unterlenker-Anbausysteme 21" und 21‴ verfügen jeweils über Unterlenker 28, die sich hinsichtlich ihres seitlichen bzw. quer zur Längsrichtung erstreckenden Abstands voneinander unterscheiden und die zur Ankopplung eines Anbaugeräts 20 an das Trägerfahrzeug an den zweiten, kugelartig konturierten Abschnitten 27b des jeweiligen Adapters 27 angreifen.

Die beiden Abschnitte 27a, 27b des Adapters 27 sind nebeneinander positioniert.

Der Adapter 27 ist dabei als einteilige oder einstückige bzw. monolithische Adapterbuchse ausgebildet, die eine Ausnehmung 29 aufweist, über welche die Adapterbuchse auf einen Trägerbolzen 30 aufgeschoben werden kann.

Durch Aufschieben der Adapterhülse in einer von zwei möglichen, um 180° versetzten Relativpositionen auf dem jeweiligen Trägerbolzen 30 kann der jeweilige Adapter 27 zur Anbindung des Anbaugeräts 20 an die unterschiedlichen Anbausysteme 21, 21', 21" und 21‴ eines landwirtschaftlichen Trägerfahrzeugs genutzt werden.

Sollen die Adapter 27 genutzt werden, um das Anbaugerät 20 entweder gemäß Fig. 1 und 2 an ein US-Quick-Hitch-Anbausystem 21 der Kategorie 2 oder der Kategorie 3N oder gemäß Fig. 7 und 8 an ein europäisches Unterlenker-Anbausystem 21‴ der Kategorie III anzubinden, so werden die Adapter 27 derart auf den jeweiligen Trägerbolzen 30 montiert, dass, bezogen auf den Längsträger 24 des Anbaugeräts 20 die kugelartigen Abschnitte 27b nach außen und die zylinderförmig konturierten Abschnitte 27a nach innen weisen.

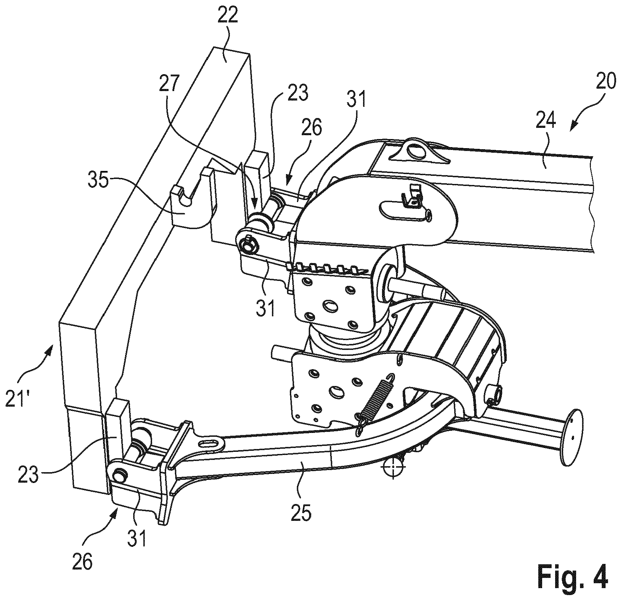

Sollen hingegen im Sinne der Fig. 3 und 4 die Adapter 27 zur Anbindung des Anbaugeräts 20 an ein US-Quick-Hitch-Anbausystem der Kategorie 3 oder der Anbindung des Anbaugeräts 20 an ein europäisches Unterlenker-Anbausystem 21" der Kategorie II dienen, so werden die Adapter 27 derart montiert, dass, bezogen auf den Längslenker 24 des Anbaugeräts 20 die kugelförmig konturierten Abschnitte 27b nach innen und die zylinderartig konturierten Abschnitte 27a nach au-ßen weisen bzw. gerichtet sind.

Der erste, zylindrisch konturierte Abschnitt 27a des jeweiligen Adapters 27 verfügen über einen Außendurchmesser, der dem Durchmesser des US-Quick-Hitch-Anbausystems entspricht. Die Durchmesser der US-Quick-Hitch-Anbausysteme der Kategorien 2, 3N und 3 sind dabei identisch, dieselben unterscheiden sich lediglich hinsichtlich des Abstands ihrer Haken 23.

Der Außendurchmesser der kugelförmigen bzw. kugelartig konturierten Abschnitts 27b des jeweiligen Adapters 27 entspricht dem Innendurchmesser der europäischen Unterlenker-Anbausysteme der Kategorien II und III, die über identische Innendurchmesser verfügen, sich jedoch durch den seitlichen Abstand der Unterlenker 28 voneinander unterscheiden.

Der Adapter 27 verfügt an einer ersten Seite des zylindrisch konturierten Abschnitts 27a über eine erste Anlaufscheibe 27c mit einer dem zylindrisch konturierten Abschnitt 27a zugewandten Anlaufschräge 27d sowie an einem gegenüberliegenden zweiten Ende des zylindrisch konturierten Abschnitts 27a, und zwar zwischen dem zylindrisch konturierten Abschnitt 27a und dem kugelförmig konturierten Abschnitt 27b, über eine zweite Anlaufscheibe 27e mit einer ebenfalls dem zylindrisch konturierten Abschnitt 27a zugewandten Anlaufschräge 27f und vorzugsweise weiterhin einer dem kugelförmig konturierten Abschnitt 27b zugewandten Anlaufschräge 27g. Über diese Anlaufschrägen 27d, 27f und 27g wird die Anbindung der Anbausysteme an die Adapter 27 erleichtert.

Der zylindrisch konturierte Abschnitt 27a des jeweiligen Adapters 27 weist eine Länge auf, die der Breite eines Hakens des US-Quick-Hitch-Anbausystems 21 bzw. 21' entspricht, und zwar insbesondere der Länge eines Hakens des US-Quick-Hitch-Anbausystems 21 der Kategorie 2 oder der Kategorie 3N oder der Länge eines Hakens 23 des US-Quick-Hitch-Anbausystems der Kategorie 3. Die Haken 23 dieser Kategorien 2, 3N und 3 des US-Quick-Hitch-Anbausystems verfügen dabei über identische Längen und identische Innendurchmesser, wie bereits ausgeführt, unterscheiden sich diese Kategorien der US-Quick-Hitch-Anbausysteme hinsichtlich des Abstands der Haken 23.

Der kugelförmig konturierte Abschnitt 27b des jeweiligen Adapters 27 verfügt über einen Außendurchmesser, der dem Innendurchmesser des europäischen Unterlenker-Anbausystems 21" oder 21‴ entspricht, wobei, wie bereits ausgeführt, ein europäisches Unterlenker-Anbausystem der Kategorie III sowie ein europäisches Unterlenker-Anbausystem der Kategorie III identische Innendurchmesser aufweisen, dieselben unterscheiden sich jedoch hinsichtlich des seitlichen Abstands der Unterlenker 28.

Die Anlaufscheiben 27c, 27e des jeweiligen Adapters 27 verfügen vorzugsweise über eine definierte Breite b (siehe Fig. 9), die vorzugsweise zwischen 2 mm und 6 mm, insbesondere zwischen 3 mm und 5 mm, besonders bevorzugt in etwa 4 mm, beträgt.

Ferner verfügen die Anlaufscheiben 27c, 27e über einen Radius r und damit über einen Durchmesser, der in etwa dem Außendurchmesser des kugelförmig konturierten Abschnitts 27b des Adapters 27 entspricht, vorzugsweise um einige Millimeter größer ist als der Außendurchmesser des kugelförmig konturierten Abschnitts 27b des jeweiligen Adapters 27.

Die Erfindung betrifft nicht nur den Adapter 27 als solchen, der vorzugsweise als Adapterbuchse ausgeführt ist, sondern auch das landwirtschaftliche Anbaugerät 20, welches zwei derartige Adapter 27 in entsprechenden Aufnahmen 26 bzw. 26` aufnimmt bzw. trägt.

Jede der Aufnahmen 26 bzw. 26`, welche einen oben beschriebenen Adapter 27 aufnimmt, verfügt über zwei voneinander beabstandete Laschen 31, wobei sich der jeweilige Trägerbolzen 30 für den jeweiligen Adapter 27, welcher den vorzugsweise als Adapterbuchse ausgebildeten Adapter 27 aufnimmt bzw. trägt, durch die sich gegenüberliegenden Laschen 31 der jeweiligen Aufnahme 26, 26' hindurch erstreckt. An einem Ende eines Trägerbolzens 31 greift dabei ein Splint 32 zur Fixierung des Trägerbolzens 30 und damit das vom Trägerbolzen 30 aufgenommenen Adapters 27 an der jeweiligen Aufnahme 26, 26' an. An einem gegenüberliegenden Ende des Trägerbolzen 30 ist ein vorzugsweise umlaufender Anschlag 33, in Form eines Absatzes, ausgebildet, welcher die Einführtiefe des jeweiligen Trägerbolzens 27 in eine der Laschen 31 begrenzt und so ebenfalls der Lagefixierung des Trägerbolzens 30 und damit der vom Trägerbolzen 30 aufgenommenen Adapterbuchse 27 im Bereich der jeweiligen Aufnahme 26 dient. Alternativ könnte der Trägerbolzen 30 auch beidseitig durch Splinte 32 in seiner Lage gesichert werden.

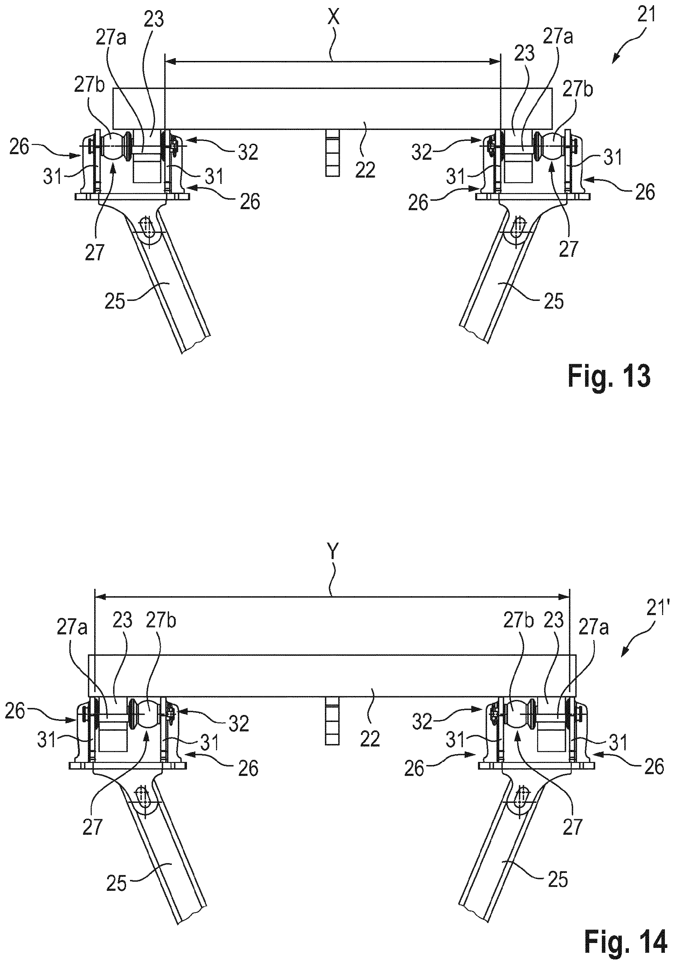

Bei dem landwirtschaftlichen Anbaugerät 20 sind, wie am besten Fig. 13 entnommen werden kann, die einander zugewandten Laschen 31 der beiden Aufnahmen 26 mit einem Abstand X voneinander beabstandet, der maximal einem Innenmaß eines Hakenabstands der Haken 23 des US-Quick-Hitch-Anbausystems 21 der Kategorie 2 oder der Kategorie 3N entspricht. Ein Abstand Y zwischen den voneinander abgewandten Laschen 31 der beiden Aufnahmen 26 entspricht minimal dem Außenmaß des Hakenabstands der Haken 23 des US-Quick-Hitch-Anbausystems der Kategorie 3 bzw. dem Innenmaß des Hakenabstands zuzüglich zwei Mal der Hakenbreite der Haken 23.

Die Erfindung kommt vorzugsweise bei landwirtschaftlichen Anbaugeräten 20 zum Einsatz, die insbesondere als Mähwerk, Schwader, Merger oder Wender ausgebildet sind.

Um die Ankopplung des jeweiligen Anbausystems des landwirtschaftlichen Trägerfahrzeugs an die Adapter 27, die in den Aufnahmen 26 gehalten sind, zu erleichtern, ist nach der in Fig. 12 gezeigten Weiterbildung der Erfindung vorgesehen, dass die Laschen 31 der dort gezeigten Aufnahme 26' Einführschrägen 34 ausbilden, die insbesondere mit den Haken 23 eines US-Quick-Hitch-Anbausystems 21 bzw. 21' zusammenwirken.

Nach einer vorteilhaften Weiterbildung der Erfindung ist vorgesehen, dass das Anbaugerät 20 insbesondere im Bereich seines Längsträgers 24 über eine Aufnahme verfügt, an die insbesondere ein oberer Haken 35 eines US-Quick-Hitch-Anbausystems 21 bzw. 21' oder ein nicht gezeigter Oberlenker eines europäischen Anbausystems angebunden werden kann.

Mit der Erfindung ist es möglich, über einen einzigen Adapter ein Anbaugerät 20 an unterschiedliche Anbausysteme eines landwirtschaftlichen Trägerfahrzeugs zu koppeln.

### Bezugszeichenliste

- 20: Anbaugerät
- 21: Anbausystem
- 21': Anbausystem
- 21": Anbausystem
- 21‴: Anbausystem
- 22: Querbalken
- 23: Haken
- 24: Längsträger
- 25: Holm
- 26: Aufnahme
- 26': Aufnahme
- 27: Adapter
- 27a: Abschnitt
- 27b: Abschnitt
- 27c: Anlaufscheibe
- 27d: Anlaufschräge
- 27e: Anlaufscheibe
- 27f: Anlaufschräge
- 27g: Anlaufschräge
- 28: Unterlenker
- 29: Ausnehmung
- 30: Trägerbolzen
- 31: Lasche
- 32: Splint
- 33: Anschlag
- 34: Einführschräge

## Patentansprüche

1. Adapter (27) eines landwirtschaftlichen Anbaugeräts,
mit einem ersten, zylindrisch konturierten Abschnitt (27a), dessen Außendurchmesser ausgebildet ist, um das landwirtschaftliche Anbaugerät mit einem US-Quick-Hitch-Anbausystem eines landwirtschaftlichen Trägerfahrzeugs zu koppeln,
mit einem zweiten, kugelförmig konturierten Abschnitt (27b), dessen Außendurchmesser ausgebildet ist, um das landwirtschaftliche Anbaugerät mit einem europäischen Unterlenker-Anbausystem eines landwirtschaftlichen Trägerfahrzeugs zu koppeln, **dadurch gekennzeichnet, dass** der Adapter (27) als einstückige Adapterbuchse ausgebildet ist, die eine Ausnehmung (29) aufweist, über welche dieselbe auf einen Trägerbolzen (30) aufschiebbar ist und die beiden Abschnitte (27a, 27b) nebeneinander angeordnet sind.

2. Adapter nach Anspruch 1, **dadurch gekennzeichnet, dass** an einer ersten Seite des zylindrisch konturierten Abschnitts (27a) eine erste Anlaufscheibe (27c) mit einer dem zylindrisch konturierten Abschnitt (27a) zugewandten Anlaufschräge (27d) ausgebildet ist, und dass an einer zweiten Seite des zylindrisch konturierten Abschnitts (27a) eine zweite Anlaufscheibe (27e) mit einer dem zylindrisch konturierten Abschnitt (27a) zugewandten Anlaufschräge (27f) ausgebildet ist.

3. Adapter nach Anspruch 2, **dadurch gekennzeichnet, dass** die zweite Anlaufscheibe (27e) ferner eine dem kugelförmig konturierten Abschnitt (27b) zugewandte Anlaufschräge (27g) aufweist.

4. Adapter nach Anspruch 2 oder 3, **dadurch gekennzeichnet, dass** die Anlaufscheiben (27c, 27e) eine Breite zwischen 2 mm und 6 mm, vorzugsweise eine Breite zwischen 3 mm und 5 mm, aufweisen.

5. Adapter nach einem der Ansprüche 1 bis 4, **dadurch gekennzeichnet, dass** der zylindrisch konturierte Abschnitt (27a) eine Länge aufweist, die der Breite des US-Quick-Hitch-Anbausystems entspricht, insbesondere der Länge eines US-Quick-Hitch-Anbausystems der Kategorie 2 oder der Kategorie 3N oder der Kategorie 3.

6. Adapter nach einem der Ansprüche 1 bis 5, **dadurch gekennzeichnet, dass** der kugelförmig konturierte Abschnitt (27b) einen Durchmesser aufweist, der dem Durchmesser des europäischen Unterlenker-Anbausystems entspricht, insbesondere dem Durchmesser eines europäischen Unterlenker-Anbau-Systems der Kategorie II oder der Kategorie III.

7. Landwirtschaftliches Anbaugerät,
mit Aufnahmen (26, 26'),
mit Adaptern (27) nach einem der Ansprüche 1 bis 6, die an den Aufnahmen (26, 26') montiert sind.

8. Landwirtschaftliches Anbaugerät nach Anspruch 7, **dadurch gekennzeichnet, dass** die jeweilige Aufnahme (26, 26') zwei voneinander beabstandete Laschen (31) aufweist, an welchen der jeweilige Adapter (27) montiert ist.

9. Landwirtschaftliches Anbaugerät nach Anspruch 8, **dadurch gekennzeichnet, dass** sich der Trägerbolzen (30) für den jeweiligen als Adapterbuchse ausgebildeten Adapter (27) durch die Laschen (31) der jeweiligen Aufnahme (26, 26') hindurch erstreckt, und dass die jeweilige Adapterbuchse auf den jeweiligen Trägerbolzen (30) aufgesteckt ist.

10. Landwirtschaftliches Anbaugerät nach Anspruch 8 oder 9, **dadurch gekennzeichnet, dass**
ein Abstand (X) zwischen einander zugewandten Laschen (31) der Aufnahmen (26, 26') maximal einem Innenmaß eines Hakenabstands des US-Quick-Hitch-Anbausystems der Kategorie 2 oder 3N entspricht,
ein Abstand (Y) zwischen voneinander abgewandten Laschen (31) der Aufnahmen (26, 26') minimal einem Außenmaß des Hakenabstands des US-Quick-Hitch-Anbausystems der Kategorie 3 entspricht.

11. Landwirtschaftliches Anbaugerät nach einem der Ansprüche 8 bis 10,
**dadurch gekennzeichnet, dass** die Laschen (31) in Einführrichtung des Anbausystems gesehen Einführschrägen (34) aufweisen.

12. Landwirtschaftliches Anbaugerät nach einem der Ansprüche 8 bis 11,
**dadurch gekennzeichnet, dass** dasselbe ein Mähwerk oder ein Schwader oder ein Merger oder ein Wender ist.

## Claims

1. Adapter (27) of an agricultural attachment,
having a first, cylindrically contoured section (27a), the external diameter of which is designed to couple the agricultural attachment to a US quick-hitch attachment system of an agricultural support vehicle,
having a second, spherically contoured section (27b), the external dimension of which is designed to couple the agricultural attachment to a European lower-link attachment system of an agricultural support vehicle,
**characterized in that** the adapter (27) is formed as a one-piece adapter bush, which has a recess (29) via which the same can be pushed onto a carrier pin (30), and the two sections (27a, 27b) are arranged beside each other.

2. Adapter according to Claim 1, **characterized in that** a first run-on disc (27c) with a run-on bevel (27d) facing the cylindrically contoured section (27a) is formed on a first side of the cylindrically contoured section (27a), and **in that** a second run-on disc (27e) having a run-on bevel (27f) facing the cylindrically contoured section (27a) is formed on a second side of the cylindrically contoured section (27a).

3. Adapter according to Claim 2, **characterized in that** the second run-on disc (27e) also has a run-on bevel (27g) facing the spherically contoured section (27b).

4. Adapter according to Claim 2 or 3, **characterized in that** the run-on discs (27c, 27) have a width between 2 mm and 6 mm, preferably a width between 3 mm and 5 mm.

5. Adapter according to one of Claims 1 to 4, **characterized in that** the cylindrically contoured section (27a) has a length which corresponds to the width of the US quick-hitch attachment system, in particular the length of a US quick-hitch attachment system of Category 2 or Category 3N or Category 3.

6. Adapter according to one of Claims 1 to 5, **characterized in that** the spherically contoured section (27b) has a diameter which corresponds to the diameter of the European lower-link attachment system, in particular the diameter of a European lower-link attachment system of Category II or Category III.

7. Agricultural attachment
having holders (26, 26'),
having adapters (27) according to one of Claims 1 to 6, which are mounted on the holders (26, 26').

8. Agricultural attachment according to Claim 7, **characterized in that** the respective holder (26, 26') has two lugs (31) spaced apart from each other, on which the respective adapter (27) is mounted.

9. Agricultural attachment according to Claim 8, **characterized in that** the carrier pin (30) for the respective adapter (27) designed as an adapter bush extends through the lugs (31) of the respective holder (26, 26'), and **in that** the respective adapter bush is pushed onto the respective carrier pin (30).

10. Agricultural attachment according to Claim 8 or 9, **characterized in that**
a spacing (X) between lugs (31) facing each other of the holders (26, 26') corresponds at most to an internal dimension of a hook spacing of the US quick-hitch attachment system of Category 2 or 3N,
a spacing (Y) between lugs (31) facing away from each other of the holders (26, 26') corresponds at least to an external dimension of the hook spacing of the US quick-hitch attachment system of Category 3.

11. Agricultural attachment according to one of Claims 8 to 10, **characterized in that** the lugs (31), as seen in the insertion direction of the attachment system, have insertion bevels (34).

12. Agricultural attachment according to one of Claims 8 to 11, **characterized in that** it is a mowing machine or a windrower or a merger or a tedder.

## Revendications

1. Adaptateur (27) d'un accessoire agricole,
avec une première section (27a) à contour cylindrique, dont le diamètre extérieur est configuré pour coupler l'accessoire agricole à un système de montage US-Quick-Hitch d'un véhicule porteur agricole,
avec une deuxième section (27b) à contour sphérique, dont le diamètre extérieur est configuré pour coupler l'accessoire agricole à un système de montage de bras inférieur européen d'un véhicule porteur agricole, **caractérisé en ce que** l'adaptateur (27) est configuré sous forme de douille d'adaptateur monobloc, qui présente un évidement (29), par lequel elle peut être glissée sur un boulon de support (30) et les deux sections (27a, 27b) sont agencées côte à côte.

2. Adaptateur selon la revendication 1, **caractérisé en ce qu'**une première rondelle de butée (27c) est formée sur un premier côté de la section à contour cylindrique (27a), avec un biais de butée (27d) tourné vers la section à contour cylindrique (27a), et **en ce qu'**une deuxième rondelle de butée (27e) est formée sur un deuxième côté de la section à contour cylindrique (27a), avec un biais de butée (27f) tourné vers la section à contour cylindrique (27a).

3. Adaptateur selon la revendication 2, **caractérisé en ce que** la deuxième rondelle de butée (27e) présente en outre un biais de butée (27g) tourné vers la section à contour sphérique (27b).

4. Adaptateur selon la revendication 2 ou 3, **caractérisé en ce que** les rondelles de butée (27c, 27e) présentent une largeur comprise entre 2 mm et 6 mm, de préférence une largeur comprise entre 3 mm et 5 mm.

5. Adaptateur selon l'une quelconque des revendications 1 à 4, **caractérisé en ce que** la section à contour cylindrique (27a) présente une longueur qui correspond à la largeur du système de montage US-Quick-Hitch, notamment à la longueur d'un système de montage US-Quick-Hitch de catégorie 2 ou de catégorie 3N ou de catégorie 3.

6. Adaptateur selon l'une quelconque des revendications 1 à 5, **caractérisé en ce que** la section à contour sphérique (27b) présente un diamètre qui correspond au diamètre du système de montage de bras inférieur européen, notamment au diamètre d'un système de montage de bras inférieur européen de catégorie II ou de catégorie III.

7. Accessoire agricole,
avec des logements (26, 26'),
avec des adaptateurs (27) selon l'une quelconque des revendications 1 à 6, qui sont montés sur les logements (26, 26').

8. Accessoire agricole selon la revendication 7, **caractérisé en ce que** le logement respectif (26, 26') présente deux pattes (31) espacées l'une de l'autre, sur lesquelles est monté l'adaptateur respectif (27).

9. Accessoire agricole selon la revendication 8, **caractérisé en ce que** le boulon de support (30) pour l'adaptateur (27) respectif configuré sous forme de douille d'adaptateur s'étend à travers les pattes (31) du logement (26, 26') respectif, et **en ce que** la douille d'adaptateur respective est enfichée sur le boulon de support (30) respectif.

10. Accessoire agricole selon la revendication 8 ou 9, **caractérisé en ce que**
une distance (X) entre des pattes (31) des logements (26, 26') tournées l'une vers l'autre correspond au maximum à une mesure intérieure d'une distance de crochet du système de montage US-Quick-Hitch de catégorie 2 ou 3N,
une distance (Y) entre des pattes (31) des logements (26, 26') détournées l'une de l'autre correspond au minimum à une mesure extérieure d'une distance de crochet du système de montage US-Quick-Hitch de catégorie 3.

11. Accessoire agricole selon l'une quelconque des revendications 8 à 10, **caractérisé en ce que** les pattes (31), vues dans la direction d'insertion du système de montage, présentent des biais d'insertion (34).

12. Accessoire agricole selon l'une quelconque des revendications 8 à 11, **caractérisé en ce que** celui-ci est une barre de coupe ou un andaineur ou une herse ou un faneur.
